# EUROPEAN PATENT SPECIFICATION

(11) **EP 0 895 403 B1**
(45) Date of publication and mention of the grant of the patent: **03.03.2004**
(21) Application number: 98305505.4
(22) Date of filing: 10.07.1998
(51) Int. Cl.: H04N 1/047

(54) **Device for correcting non-linearity of scanner in image forming apparatus**
Vorrichtung zur Korrektur von Nichtlinearitäten eines Abtasters in einem Bilderzeugungsgerät
Dispositif pour la correction de non-linéarité d'un balayeur dans un appareil de formation d'images

(30) Priority: 30.07.1997 KR 9736180
(43) Date of publication of application: 03.02.1999
(73) Proprietor: Samsung Electronics Co., Ltd., Suwon-city, Kyungki-do (KR)
(72) Inventor: Park, Sang-shin, Paldal-gu, Suwon-City, Kyungki-do (KR)
(74) Representative: Robinson, Ian Michael

(56) References cited:
- EP-A- 0 581 083
- EP-A- 0 679 018
- WO-A-97/19550
- US-A- 4 067 760
- US-A- 4 571 623
- US-A- 4 716 292

## Description

The present invention relates to an image forming apparatus, and more particularly, to a device for correcting the non-linearity of a scanner without reference to the pulse width of a varying scanning position signal.

Generally, in an image forming apparatus such as a laser printer, when there is a scanning start signal, a laser scanning unit scans a photosensitive belt to form a latent image. Then, a developing device supplies a liquid toner to the photosensitive belt, and develops the latent image to form a toner image, and the toner image is printed on a paper sheet by transfer and fixing devices. In a series of processes, while the correction of scanner non-linearity begins synchronously at the rising edge of a scanning start signal, the scanning is performed. In particular, correction of the non-linearity of the scanner comprises the steps of: detecting a predetermined portion of the photosensitive belt, and generating the scanning start signal; and generating a synchronizing signal corresponding to the scanning start signal wherein the frequency of the generated synchronizing signal is used as the image input frequency of the scanner.

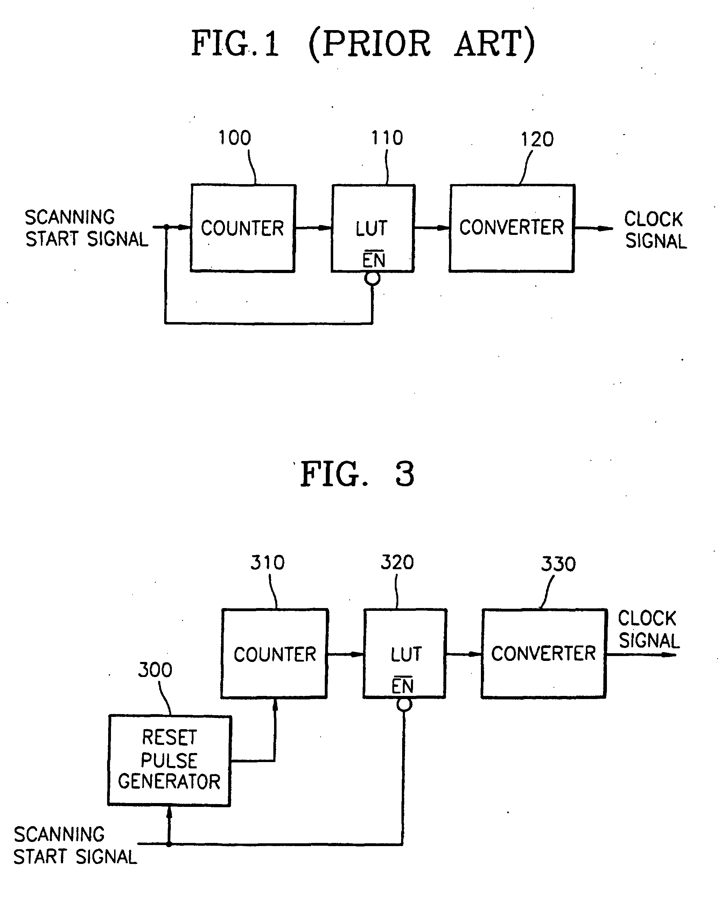

Figure 1 shows a block diagram illustrating the structure of a conventional device for correcting the non-linearity of a scanner. Referring to Figure 1, a conventional device for correcting the non-linearity of the scanner comprises: a counter 100 which is reset by the input scanning start signal and counts the scanning start signals; a LUT (look-up table) 110 which is enabled by the scanning start signal, recognizes an output of the counter 100 as an address, and outputs the look-up table information corresponding to the address in the form of digital data; and a converter 120 which outputs a clock signal having a frequency corresponding to the digital data output from the LUT 110. The clock signal is input to a laser scanning unit (not shown), and thus the scanning can be carried out.

In the conventional device for correcting non-linearity of the scanner as described above, a pattern for generating a synchronizing signal is formed at a portion of a photosensitive belt, and the device is synchronously operated by the scanning start signal which is generated by sensing the pattern. In this case, since the pulse width of the scanning start signal may be abnormally deformed due to vibrations from sources such as the photosensitive belt, a starting point for correcting non-linearity may be imprecisely determined.

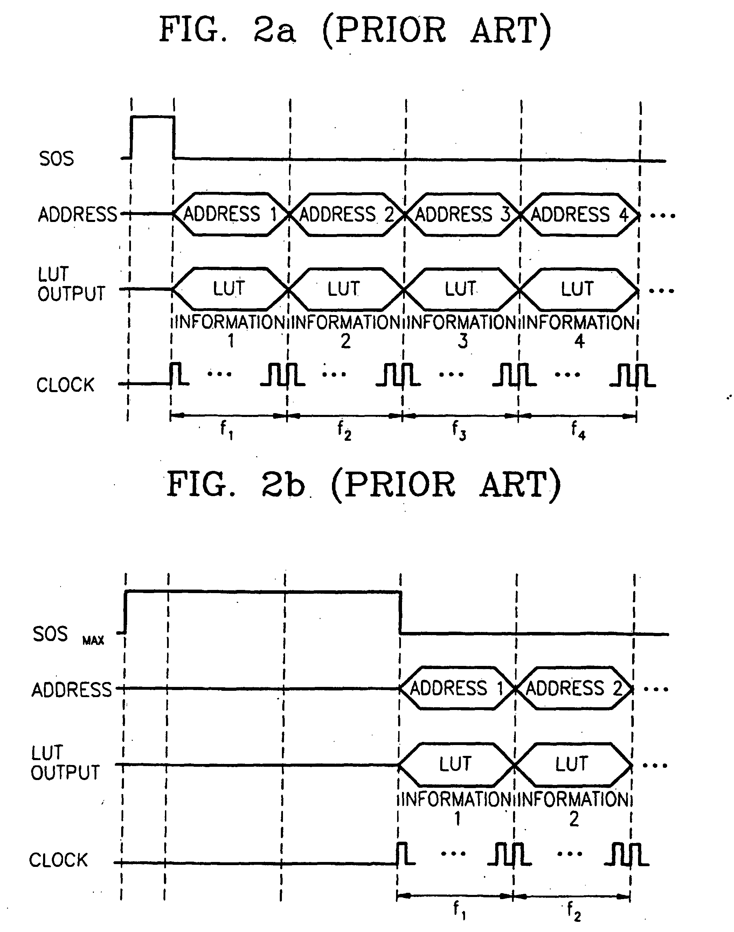

Figures 2A and 2B show timing diagrams for describing the problem of the conventional device for correcting the non-linearity of the scanner. Referring to Figure 2A, when a scanning start signal (SOS) of a normal pulse width is generated, the counter 100 is reset at the falling edge of the scanning start signal, and generates a corresponding address signal, for example, address 1, address 2, address 3, and so on. The corresponding digital data such as LUT information 1, LUT information 2, LUT information 3, stored in the LUT 110 is output according to the address signal, and the converter 120 outputs a synchronizing signal having frequencies such as f₁, f₂, f₃, and so on corresponding to the digital data. While the counter 100 outputs address signals, the above procedure is repeated. However, as shown in Figure 2B, since the device for correcting the non-linearity of the scanner is operated at the falling edge of the scanning start signal, the address signal output from the counter 100, the digital data output from the LUT110, and the synchronizing signal output from the converter 120 are delayed when a scanning start signal (SOSₘₐₓ) of a maximized pulse width is generated because of the vibration of the photosensitive belt.

As described above, in the conventional device for correcting the non-linearity of the scanner, the pulse width of a scanning start signal may be abnormally narrowed or widened due to mechanical errors caused by vibrations from sources such as the photosensitive belt, and accordingly the correct starting position is imprecisely determined. Consequently, there is a problem in that the correction of the non-linearity of the scanner cannot be performed precisely in the conventional device.

It is an aim of at least preferred embodiments of the present invention to provide a device for correcting the non-linearity of a scanner, preferably operating irrespective of the errors due, for example, to the vibration of a photosensitive belt.

According to one aspect of the present invention, there is provided a device for correcting the non-linearity of a scanner comprising: a reset pulse generator for generating a reset pulse with a predetermined pulse width in synchronization with a scanning start signal generated in accordance with an input photosensitive belt sensing signal; an address generator for outputting an address by being reset by the reset pulse; a LUT (look-up table) enabled by the scanning start signal, for receiving an address from the address generator and for outputting information corresponding to the address in the form of digital data; and a converter for outputting a synchronizing signal with a frequency corresponding to the digital data from the LUT.

Preferably, the information stored in the LUT is made by measuring the scanner linearity with the same condition that a scanning start signal of a preset pulse width was generated. The reset pulse generator generates a pulse having the same pulse width as the pulse width of the scanning start signal used when the information stored in the LUT was made, and generates the reset pulse in synchronization with the rising edge of the scanning start signal. The LUT is enabled in synchronization with the falling edge of the scanning start signal, and the address generator is a counter.

For a better understanding of the invention, and to show how embodiments of the same may be carried into effect, reference will now be made, by way of example, to the accompanying diagrammatic drawings, in which:
Figure 1 is a schematic block diagram illustrating a conventional device for correcting the non-linearity of a scanner;
Figure 2A is a timing diagram illustrating output signals when a scanning start signal is normally generated in the device of Figure 1;
Figure 2B is a timing diagram illustrating output signals when a scanning start signal is generated for an extended time in the device of Figure 1;
Figure 3 is a block diagram illustrating a device for correcting scanner non-linearity according to a preferred embodiment of the present invention; and
Figure 4 is a timing diagram illustrating output signals when a scanning start signal is generated for an extended time in the device of Figure 3.

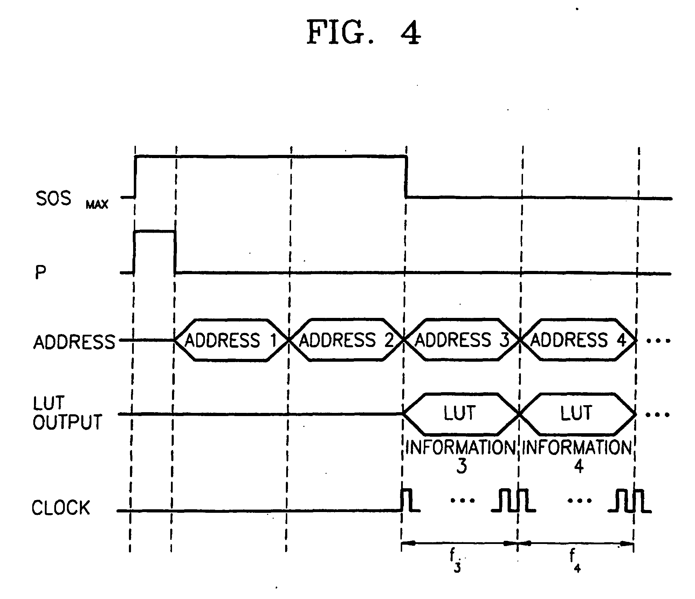

Figure 3 shows a block diagram illustrating constituent elements of a preferred device for correcting the non-linearity of a scanner. Referring to Figure 3, the correcting device comprises a reset pulse generator 300, a counter 310, a LUT (look-up table) 320 and a converter 330, and generates a clock signal in response to a scanning start signal input.

The scanning start signal is input into the reset pulse generator 300 and the LUT 320, to let the reset pulse generator 300 output a reset pulse of a predetermined pulse width, and enable the LUT 320. At this time, LUT information is already stored in the LUT 320. The LUT information is made by measuring the scanner linearity with the same condition that a scanning start signal of a preset pulse width was generated. The reset pulse width output from the reset pulse generator 300 has no relation to the pulse width of the scanning start signal, and is the same pulse width as used when the LUT information was made by a physical mechanism for synchronizing with the scanning start signal. Therefore, even though the falling edge of the scanning start signal occurs abnormally late, the counter 310 which is input with the reset pulse from the reset pulse generator 300 counts the reset pulses, and the counted value is input into the LUT 320 and serves as an address. Though the output of the counter 310 is input into the LUT 320 as an address signal, the LUT 320 does not operate until the falling edge of the scanning start signal. The LUT 320 is enabled at the falling edge of the scanning start signal, and outputs the LUT information in the form of digital data. As described above, the output digital data is the data stored in the LUT 320 by measuring the linearity of the scanner in advance. The converter 330 generates a clock signal having a frequency corresponding to the digital data output from the LUT 320. The clock signal output from the converter 330 as a signal for correcting the non-linearity of the scanner is input into a laser scanning unit. Since the laser scanning unit scans a photosensitive belt according to the input clock signal, the non-linearity is simultaneously corrected during scanning. At this time, though the pulse width of the scanning start signal, which serves as a reference signal of the device for correcting the non-linearity is varied, the counter 310 is operated by a pulse having a pulse width having no relation to the pulse width of the scanning start signal, and the LUT 320 is enabled at the falling edge of the scanning start signal. Accordingly, the correction of the non-linearity can be precisely accomplished.

Figure 4 shows signal waveforms in accordance with the operation of the device of Figure 3. Referring to Figure 4, without reference to the pulse width of the scanning start signal (SOSₘₐₓ), varying by events such as vibrations of the photosensitive belt, the counter 310 is reset and operates at the falling edge of the reset pulse (P) generated in the reset pulse generator 300. Therefore, though the falling edge of the scanning start signal (SOSₘₐₓ) does not yet occur, the counter 310 outputs the counted value, i.e., the address signal. Meanwhile, the LUT 320 is enabled at the falling edge of the scanning start signal. Therefore, since the counter 310 outputs address 3 at the falling edge of the scanning start signal, the LUT 320 outputs LUT information 3, i.e., the LUT information corresponding to address 3, in the form of digital data. Then, the converter 330 converts the digital data into a clock pulse with frequency f₃ and outputs the clock pulse. Further, when the counter 310 outputs address 4 after outputting address 3, the LUT 320 outputs LUT information 4, i.e., the LUT information corresponding to address 4, in the form of digital data. Consequently, the clock pulse with frequency f₄ is input into the laser scanning unit, and the non-linearity of the scanner is corrected.

With the device for correcting the non-linearity of the scanner of an image forming apparatus described above, since a constant clock pulse can be output even when the pulse width of a scanning start signal is varied, the non-linearity can be precisely corrected.

## Claims

1. A device for correcting the non-linearity of a scanner, comprising:
an address generator (310) for outputting an address;
a look-up table LUT (320) for receiving an address from the address generator (310) and for outputting information corresponding to the address in the form of digital data; and
a converter (330) for outputting a synchronizing signal with a frequency corresponding to the digital data from the LUT (320);
**characterised by**:
a reset pulse generator (300) for generating a reset pulse with a predetermined pulse width in synchronization with a scanning start signal generated in accordance with an input photosensitive belt sensing signal;
said address generator being reset by the reset pulse; and
said LUT being enabled by the scanning start signal.

2. The device as claimed in claim 1, wherein the information stored in the LUT (320) is made by measuring the scanner linearity using a nominal scanning start signal of a preset pulse width.

3. The device as claimed in claim 2, wherein the reset pulse generator generates a pulse (p) having the same pulse width as the pulse width of said nominal scanning start signal used when the information stored in the LUT was made.

4. The device as claimed in any of claims 1 to 3, wherein the reset pulse generator (300) generates the reset pulse in synchronization with the rising edge of the scanning start signal (SOS).

5. The device as claimed in any of claims 1 to 4, wherein the LUT (320) is enabled in synchronization the falling edge of the scanning start signal (SOS).

6. The device as claimed in any of claims 1 to 5, wherein the address generator (310) is a counter.

## Patentansprüche

1. Vorrichtung zum Korrigieren der Nichtlinearität eines Abtasters, umfassend:
einen Adressengenerator (310) zum Ausgeben einer Adresse;
eine Nachschlagetabelle LUT (320) zum Empfangen einer Adresse aus dem Adressengenerator (310) und zum Ausgeben einer der Adresse entsprechenden Information in der Form von digitalen Daten; und
einen Wandler (330) zum Ausgeben eines Synchronisationssignals mit einer den digitalen Daten aus der LUT (320) entsprechenden Frequenz;
**gekennzeichnet durch**:
einen Rücksetzimpulsgenerator (300) zum Erzeugen eines Rücksetzimpulses mit einer vorbestimmten Impulsbreite synchron mit seinem Abtaststartsignal, das gemäß einem Eingangserfassungssignal aus einem photoempfindlichen Band erzeugt wird;
wobei der Adressengenerator **durch** den Rücksetzimpuls zurückgesetzt wird; und
die LUT **durch** das Abtaststartsignal aktiviert wird.

2. Vorrichtung nach Anspruch 1, wobei die in der LUT (320) gespeicherte Information durch Messen der Abtasterlinearität unter Verwendung eines nominellen Abtaststartsignals mit einer voreingestellten Impulsbreite erstellt wird.

3. Vorrichtung nach Anspruch 2, wobei der Rücksetzimpulsgenerator einen Impuls (P) mit derselben Impulsbreite wie der Impulsbreite des nominellen Abtaststartsignals erzeugt, das bei der Erstellung der in der LUT gespeicherten Information verwendet wurde.

4. Vorrichtung nach einem der Ansprüche 1 bis 3, wobei der Rücksetzimpulsgenerator (300) den Rücksetzimpuls synchron mit der ansteigenden Flanke des Abtaststartsignals (SOS) erzeugt.

5. Vorrichtung nach einem der Ansprüche 1 bis 4, wobei die LUT (320) synchron mit der abfallenden Flanke des Abtaststartsignals (SOS) aktiviert wird.

6. Vorrichtung nach einem der Ansprüche 1 bis 5, wobei der Adressengenerator (310) ein Zähler ist.

## Revendications

1. Dispositif destiné à corriger la non-linéarité d'un balayeur, comportant :
un générateur d'adresse (310) pour délivrer en sortie une adresse,
une table à consulter LUT (320) pour recevoir une adresse provenant du générateur d'adresse (310) et pour délivrer en sortie des informations correspondant à l'adresse sous forme de données numériques, et
un convertisseur (330) pour délivrer en sortie un signal de synchronisation ayant une fréquence correspondant aux données numériques provenant de la table LUT (320),
**caractérisé par** :
un générateur d'impulsion de remise à zéro (300) pour générer une impulsion de remise à zéro ayant une largeur d'impulsion prédéterminée en synchronisation avec un signal de début de balayage généré conformément à un signal de détection de courroie photosensible d'entrée,
ledit générateur d'adresse étant remis à zéro par l'impulsion de remise à zéro, et
ladite table LUT étant activée par le signal de début de balayage.

2. Dispositif selon la revendication 1, dans lequel les informations mémorisées dans la table LUT (320) sont créées en mesurant la linéarité du balayeur en utilisant un signal de début de balayage nominal d'une largeur d'impulsion préétablie.

3. Dispositif selon la revendication 2, dans lequel le générateur d'impulsion de remise à zéro génère une impulsion (p) ayant la même largeur d'impulsion que la largeur d'impulsion dudit signal de début de balayage nominal utilisé lorsque les informations mémorisées dans la table LUT ont été créées.

4. Dispositif selon l'une quelconque des revendications 1 à 3, dans lequel le générateur d'impulsion de remise à zéro (300) génère l'impulsion de remise à zéro en synchronisation avec le flanc avant du signal de début de balayage (SOS).

5. Dispositif selon l'une quelconque des revendications 1 à 4, dans lequel la table LUT (320) est activée en synchronisation avec le flanc arrière du signal de début de balayage (SOS).

6. Dispositif selon l'une quelconque des revendications 1 à 5, dans lequel le générateur d'adresse (310) est un compteur.
